# EUROPÄISCHE PATENTANMELDUNG

(11) **EP 0 908 252 A2**
(43) Veröffentlichungstag der Anmeldung: **14.04.1999**
(21) Anmeldenummer: 98811004.5
(22) Anmeldetag: 06.10.1998
(51) Int. Cl.: B21D 39/04

(54) **Verfahren und Vorrichtung für die Verschleissprüfung an einer Presszange**

(30) Priorität: 13.10.1997 CH 2388/97
(71) Anmelder: GEBERIT TECHNIK AG, 8645 Jona (CH)
(72) Erfinder: Rüegg, Urs, 8640 Rapperswill (CH); Friedli, Matthias, 8127 Forch (CH)
(74) Vertreter: Groner, Manfred

(57) **Zusammenfassung**

Für die Verschleissprüfung an einer Presszange wird ein Prüfkörper (6) als Referenz für die vorhandene Prüfkraft verpresst. Vorzugsweise wird der Prüfkörper (6) zwischen zwei Pressbakken (3) verpresst. Der Prüfkörper (6) ist ein Bolzen der flachgepresst wird, wobei wenigstens ein Raummass (a), vorzugsweise eine Dicke (A) des verpressten Bolzens (6) als Referenz für die vorhandene Prüfkraft verwendet wird. Das Verfahren erlaubt eine einfache und sichere Verschleissprüfung auch auf Baustellen.

## Beschreibung

Die Erfindung betrifft ein Verfahren für die Verschleissprüfung einer Presszange, die wenigstens zwei Pressbacken aufweist, die zu einem im wesentlichen geschlossenen Pressraum zusammenbewegbar sind.

Die CH-A-687 368 des Anmelders zeigt eine Presszange zum Herstellen von Rohrverbindungen. Diese Presszange besitzt zwei gegenläufig schwenkbare Presshebel, die zur Aufnahme eines Rohrendes oder eines Pressfittings mit einer eine maulartige Ausnehmung aufweisenden Backe versehen sind. An diese Presshebel ist eine Zangenantriebsvorrichtung angebaut, mit der die Presshebel zum Schliessen der Backen verschwenkbar sind. Diese und ähnliche Presszangen werden seit langem zur Installation von Wasserleitungen verwendet.

Zur Gewährleistung der absoluten Dichtheit solcher Rohrverbindungen ist es bekannt, dass solche Presszangen einem unvermeidbaren Verschleiss unterliegen und dass eine periodische Überprüfung zwingend ist.

Zur Verschleissprüfung wird in der DE-O-296 02 238 ein Prüfgerät vorgeschlagen, das einen spaltbreiten Detektor aufweist, mit dem die Spaltbreite zwischen gegenüberliegenden Stirnseiten zweier benachbarter Pressbacken messbar ist. Der spaltbreite Detektor ist als optischer Sensor mit einem Laser und einem Lichtempfänger ausgebildet.

Ein weiteres Prüfgerät ist durch die DE-O-296 04 276 bekannt geworden. Mit diesem Prüfgerät wird die Endkraft des Werkzeugantriebes überprüft. Dieses Gerät besitzt ein elektronisch gesteuertes Linearventil, mit dem der Kraft-Weg-Verlauf des Antriebs simuliert wird.

Die beiden obenerwähnten Prüfgeräte sind vergleichsweise teuer und das Prüfverfahren aufwendig. Auf der Baustelle können diese Prüfgeräte in der Regel nicht eingesetzt werden.

Der Erfindung liegt die Aufgabe zugrunde, ein Verfahren und eine Vorrichtung für die Verschleissprüfung einer Presszange zu schaffen, die wesentlich einfacher und kostengünstiger sind und auch einen Einsatz auf Baustellen ermöglichen.

Das erfindungsgemässe Verfahren ist dadurch gekennzeichnet, dass sein Prüfkörper als Referenz für die vorhandene Prüfkraft verpresst wird. Das Verpressen eines solchen Prüfkörpers ist ohne weiteres auf einer Baustelle möglich. Ein teures und aufwendig zu wartendes und zu bedienendes Prüfgerät wird damit vermieden. Wesentlich ist, dass durch das Verpressen des Prüfkörpers sowohl der Antrieb als auch die Pressbacken gleichzeitig überprüft werden können. Damit können Verschleisserscheinungen oder Defekte am Antrieb als auch an den Pressbacken festgestellt werden.

Der Prüfkörper wird vorzugsweise zwischen zwei Pressbacken verpresst. Grundsätzlich ist aber auch ein Verpressen des Prüfkörpers an einer anderen Stelle der Presszange, beispielsweise zwischen Presshebel und dem Antrieb, möglich.

Das Verfahren ist dann besonders einfach und sicher, wenn nach einer Weiterbildung der Erfindung der Prüfkörper ein Bolzen ist, der flachgepresst wird. Ein Raummass des verpressten Bolzens kann dann als Referenz für die vorhandene Presskraft verwendet werden. Als Raummass wird vorzugsweise die Dicke des verpressten Teils verwendet.

Die Genauigkeit des Verfahrens ist dann besonders hoch, wenn gemäss einer Weiterbildung der Erfindung zur Positionierung des Prüfkörpers in die Presszange ein Halter für den Prüfkörper eingesetzt wird. Der Halter gewährleistet, dass die Prüfkörper beim Verpressen immer die gleiche vorbestimmte relative Position einnehmen. Die Handhabung ist dann besonders einfach, wenn der Halter zwischen zwei Pressbacken eingelegt wird und eine Bohrung aufweist, in welche der Prüfkörper eingesetzt wird. Ein solcher Halter kann wiederholt zum Verpressen verwendet werden. Der Halter und auch die Prüfkörper benötigen wenig Platz und können damit ohne weiteres in einem Werkzeugkoffer auf eine Baustelle mitgebracht werden.

Der Prüfkörper ist vorzugsweise aus Metall, insbesondere aus einer Leichtmetallegierung. Ein aus Anticorodal 112 hergestellter Prüfkörper ermöglicht eine besonders genaue Prüfung.

Die erfindungsgemässe Vorrichtung weist einen plastisch verformbaren Prüfkörper auf, der als Referenz für die vorhandene Presskraft in der Presszange zu verpressen ist. Der Prüfkörper ist nach einer Weiterbildung der Erfindung ein Bolzen mit einem Kopf und einem Schaft. Der Schaft dient zur Positionierung des Bolzens und der Kopf wird beim Prüforgan verpresst. Vorzugsweise wird der Kopf zwischen Stirnflächen der Pressbacken verpresst. Der Schaft ragt hierbei in die maulartige Ausnehmung der Pressbacken und ist vorzugsweise in einem Halter positioniert.

Nach einer Weiterbildung der Erfindung weist der Halter Mittel zur Überprüfung des verpressten Prüfkörpers auf. Diese Mittel können beispielsweise durch einen Schlitz mit einer genau bestimmten Breite realisiert sein. Kann der verpresste Teil in den Schlitz eingelegt werden, so ist nachgewiesen, dass die Pressbacken die erforderliche Endkraft erreichen. Ist der verpresste Teil zu breit und kann deshalb nicht in den Schlitz eingesetzt werden, so erreicht das Gerät die erforderliche Presskraft nicht. Die Ursache kann ein Verschleiss an den Presszangen oder auch ein Defekt am Antrieb sein. In diesem Fall darf die Presszange selbstverständlich nicht verwendet werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine Teilansicht einer Presszange mit einem eingelegten Prüfkörper in Ansicht sowie einem Halter im Querschnitt,
- Figur 2: eine Ansicht gemäss Figur 1, jedoch nach dem Verpressen des Prüfkörpers,
- Figur 3: in vergrössertem Massstab eine Ansicht eines Prüfkörpers,
- Figur 4: eine Ansicht eines Halters,
- Figur 5: eine weitere Ansicht des Halters gemäss Figur 4, und
- Figur 6: einen Querschnitt durch einen Halter.

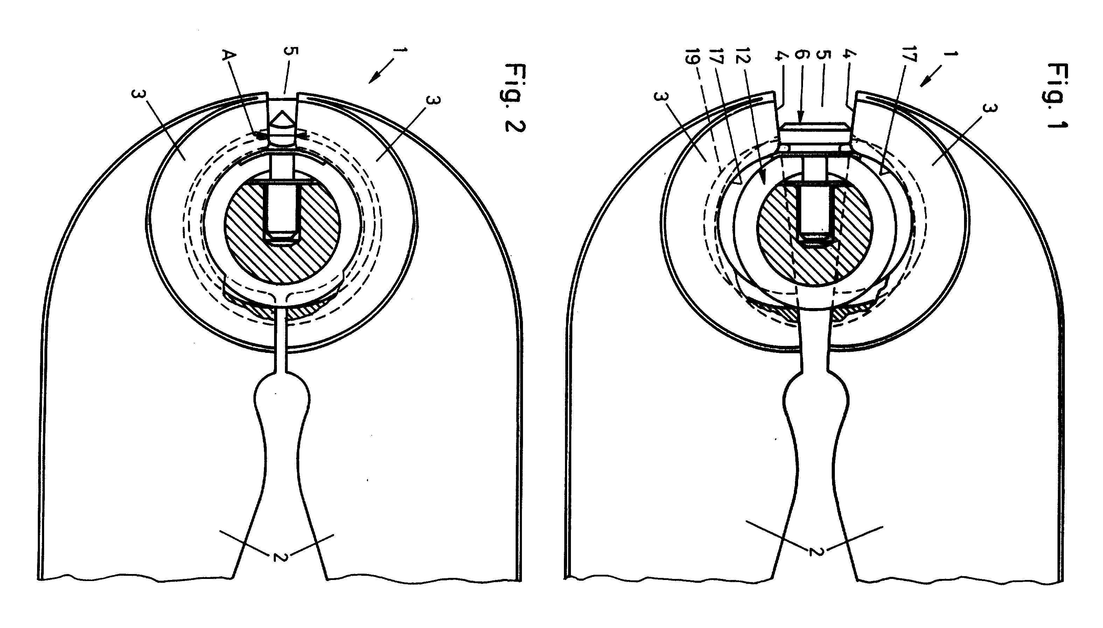

Die in den Figuren 1 und 2 gezeigte Presszange 1 entspricht der in der CH-A-687 368 gezeigten Presszange. Da diese somit an sich bekannt ist, sind in den Figuren 1 und 2 lediglich die vorderen Enden der beiden Presshebel 2 gezeigt. Diese Presshebel 2 besitzen jeweils eine Pressbacke 3 mit einer Stirnseite 4 sowie einer maulartigen Ausnehmung 17. Zwischen den beiden Stirnseiten 4 befindet sich ein Spalt 5, der beim Verschwenken der beiden Presshebel 2 zu dem in Figur 2 gezeigten Spalt verkleinert wird.

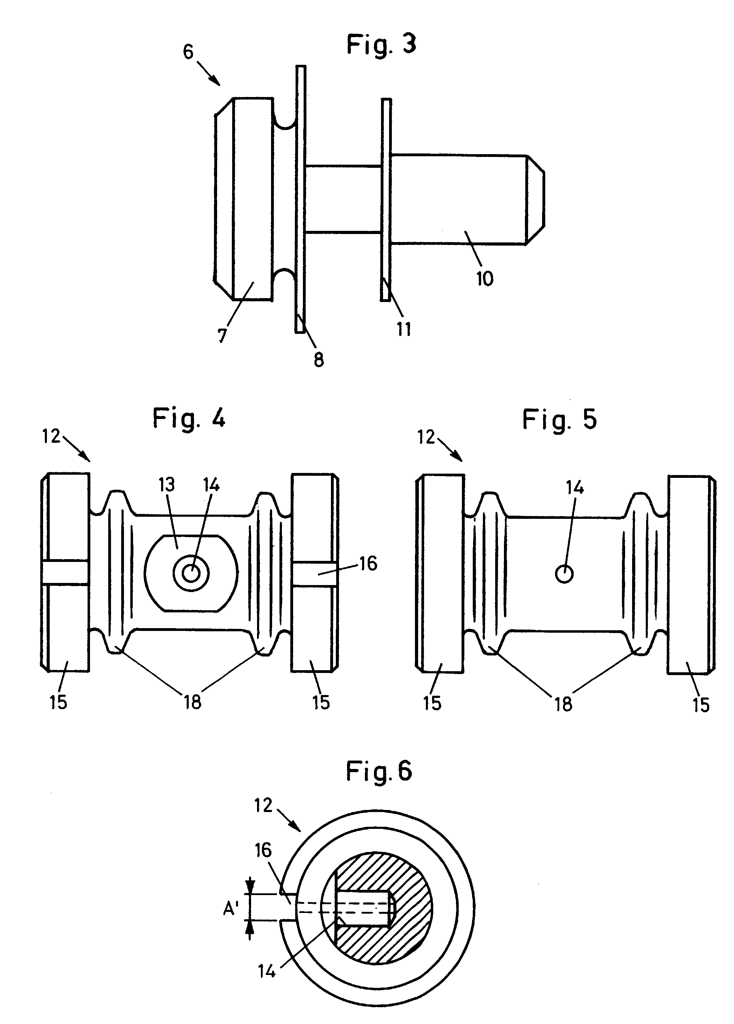

Zum Prüfen der vorhandenen Prüfkraft ist ein Prüfkörper 6 vorgesehen, der mit einem Halter 12 gemäss Figur 1 zwischen die Bakken 3 einsetzbar ist. Der Prüfkörper 6 ist ein Bolzen mit einer Länge von beispielsweise 20 mm und aus einem plastischen Werkstoff hergestellt. Als Werkstoff ist besonders Anticorodal 112 geeignet. Denkbar ist aber auch eine andere Legierung. Wie die Figur 3 zeigt, besitzt der Prüfkörper 6 einen Kopf 7, der gemäss Figur 1 mit Hilfe des Halters 12 zwischen den beiden Backen 3 so positioniert wird, dass er in einer genau vorbestimmten Position sich zwischen den Stirnflächen 4 im Spalt 5 befindet. Der Prüfkörper 6 ist auf den Halter 12 aufgesteckt, wobei ein Schaft 10 in eine korrespondierende Bohrung 14 eingreift. Eine am Schaft 10 angeformte, vergleichsweise dünne Scheibe 11 liegt hierbei an einer Abflachung 13 an. Die Scheibe 11 definiert somit die Einstecktiefe des Prüfkörpers 6 am Halter 12. Als weitere Hilfe für die genaue Positionierung des Prüfkörpers 6 besitzt dieser im Abstand zum Kopf 7 einen Kragen 8, der gemäss Figur 1 innenseitig an den Backen 3 anliegt. Durch den Halter 12 und den Kragen 8 ist somit die Position des Kopfes 6 im Spalt 5 genau definiert. Der Halter 12 ist gemäss den Figuren 4 und 5 korrespondierend zur Ausnehmung 17 ausgebildet. Umlaufende Erhöhungen 18 entsprechen somit korrespondierenden Vertiefungen 19 in der Ausnehmung 17. Sowohl der Prüfkörper 6 als auch der Halter 12 lassen sich sehr kostengünstig als Drehteile herstellen. Nachfolgend wird das Prüfverfahren erläutert.

Um die Presszange 1 auf die vorhandene Prüfkraft zu prüfen, wird der Halter 12 mit einem aufgesetzten Prüfkörper 6 gemäss Figur 1 zwischen die geoffneten Backen 3 eingesetzt. Mit dem hier nicht gezeigten Antrieb werden die beiden Presshebel 2 verschwenkt, wie dies auch beim Verpressen eines Rohres der Fall ist. Anstelle eines Rohres wird nun der Prüfkörper 6 an seinem Kopf 7 verpresst. Beim Verpressen wird der Kragen 8 an die Innenseite der Ausnehmung 17 angelegt und hierbei deformiert, wie die Figur 2 deutlich zeigt. Der Kragen 8 verhindert hierbei, dass der Kopf 7 beim Verpressen im Schlitz 5 radial nach aussen wandern kann.

Die Figur 2 zeigt die beiden Pressbacken 2 nach Beendigung des Pressvorgangs. Der Spalt 5 ist wie ersichtlich wesentlich enger als vor dem Verpressen und der Kopf 7 ist zu einem plattenförmigen Teil mit einer Dicke A plastisch deformiert. Die Dicke A ist ein Mass für die Weite des Spaltes 5. Gleichzeitig ist die Dikke A auch ein Mass für die erreichte Endkraft. Bei einem Verschleiss an der Presszange 1 oder einem Defekt am Antrieb wird die vorschriftsmässige Endkraft nicht erreicht und die Dicke A ist entsprechend grösser als ein vorgegebenes Mass.

Nach dem Verpressen wird die Presszange 1 wieder entspannt und nach dem Öffnen der beiden Backen 3 kann der verpresste Prüfkörper 6 zusammen mit dem Halter 12 von der Presszange 1 entfernt werden. Zum Überprüfen des Prüfkörpers 6 weist der Halter 12 gemäss den Figuren 4 und 6 an seitlichen Flanken 15 jeweils einen Schlitz 16 auf. Diese Schlitze 16 besitzen eine Breite A', die nur geringfügig grösser ist als die Dicke A. Kann der verpresste Kopf 7 in einen der Schlitze 16 eingesetzt werden, so kann davon ausgegangen werden, dass die vorhandene Prüfkraft hinreichend ist. Gelingt dies nicht, so ist die Dicke A grösser als die Spaltbreite A' und es ist dann anzunehmen, dass die Presszange 1 die erforderliche Prüfkraft nicht erreichen kann. Die Presszange 1 ist somit auf einen eventuellen Verschleiss oder fehlerhaften Antrieb zu überprüfen und zu revidieren oder zu ersetzen. Der verpresste Prüfkörper 6 kann hierbei als Beleg mitgeliefert werden.

Für eine weitere Prüfung der Presskraft kann der Halter 12 wiederverwendet werden. Lediglich der Prüfkörper 6 muss durch einen neuen ersetzt werden. Solche Prüfkörper 6 können aber sehr kostengünstig als Drehteil hergestellt werden. Die Verschleissprüfung ist mit dem Prüfkörper 6 somit sehr kostengünstig und einfach sowie auch schnell durchführbar. Besondere Kenntnisse oder besondere handwerkliche Anforderungen sind hierbei nicht notwendig. Die Prüfkörper und der Halter können auf kleinem Raum in jeder Werkzeugkiste untergebracht werden. Die Verschleissprüfung kann mit der erfindungsgemässen Vorrichtung somit auch ohne weiteres auf der Baustelle durchgeführt werden. Da die Kosten gering und der Zeitaufwand klein ist, ist bei geringem Aufwand ein häufigeres Prüfen als bisher möglich. Damit ist zuverlässiger als bisher vermieden, dass Verbindungen ungenügend verpresst werden. Somit können sehr hohe Bauschäden durch undichte Verbindungen sehr zuverlässig vermieden werden.

## Patentansprüche

1. Verfahren für die Verschleissprüfung an einer Presszange (1), die wenigstens zwei Pressbacken (3) aufweist, die zu einem im wesentlichen geschlossenen Pressraum zusammenbewegbar sind, dadurch gekennzeichnet, dass ein Prüfkörper (6) als Referenz für die vorhandene Prüfkraft verpresst wird.

2. Verfahren nach Anspruch 1, dadurch gekennzeichnet, dass der Prüfkörper (6) zwischen zwei Pressbacken (3) verpresst wird.

3. Verfahren nach Anspruch 1 oder 2, dadurch gekennzeichnet, dass der Prüfkörper (6) ein Bolzen ist, der flachgepresst wird und dass wenigstens ein Raummass (A), vorzugsweise eine Dikke (A), des verpressten Bolzens (6) als Referenz für die vorhandene Prüfkraft verwendet wird.

4. Verfahren nach einem der Ansprüche 1 bis 3, dadurch gekennzeichnet, dass der Prüfkörper (6) beim Verpressen an einem an diesem angeformten Schaft (10) gehalten und positioniert wird.

5. Verfahren nach einem der Ansprüche 1 bis 4, dadurch gekennzeichnet, dass der Prüfkörper (6) zu seiner Positionierung relativ zu den Pressbacken (3) in einen Halter (12) eingesetzt wird.

6. Verfahren nach Anspruch 5, dadurch gekennzeichnet, dass der Halter (12) zwischen die beiden Pressbacken (3) eingelegt wird.

7. Vorrichtung für die Verschleissprüfung an einer Presszange (1), die wenigstens zwei Pressbacken (3) aufweist, die zu einem im wesentlichen geschlossenen Raum zusammenpressbar sind, dadurch gekennzeichnet, dass sie einen plastisch verformbaren Prüfkörper (6) aufweist, der als Referenz für die vorhandene Presskraft in der Presszange (1) zu verpressen ist.

8. Vorrichtung nach Anspruch 7, dadurch gekennzeichnet, dass sie einen Halter (12) zur Positionierung des Prüfkörpers (6) aufweist.

9. Vorrichtung nach Anspruch 7 oder 8, dadurch gekennzeichnet, dass der Prüfkörper (6) zwischen zwei Stirnseiten (4) der beiden Pressbacken (3) wenigstens bereichsweise verpressbar ist.

10. Vorrichtung nach einem der Ansprüche 7 bis 9, dadurch gekennzeichnet, dass der Prüfkörper (6) als Bolzen mit einem Kopf (7) und einem Schaft (10, 11) ausgebildet ist.

11. Vorrichtung nach Anspruch 8, dadurch gekennzeichnet, dass der Halter (12) zwischen zwei Pressbacken (3) einsetzbar ist.

12. Vorrichtung nach Anspruch 11, dadurch gekennzeichnet, dass der Halter (12) wenigstens einen Schlitz (16) zum Überprüfen des verpressten Prüfkörpers (6) aufweist.

13. Vorrichtung nach einem der Ansprüche 7 bis 12, dadurch gekennzeichnet, dass der Prüfkörper (6) aus Metall, insbesondere einer Leichtmetallegierung, vorzugsweise Anticorodal 112, hergestellt ist.

14. Vorrichtung nach einem der Ansprüche 8 bis 13, dadurch gekennzeichnet, dass der Prüfkörper (6) hinter einem Kopf (7) einen Kragen (8) zur Positionierung des Kopfes (7) aufweist.

15. Vorrichtung nach einem der Ansprüche 8 bis 14, dadurch gekennzeichnet, dass der Prüfkörper (6) zu seiner Positionierung am Halter (12) eine am Schaft (10) angebrachte Scheibe (11) aufweist.
